(19) Europäisches Patentamt
European Patent Office
Office européen des brevets

(11) **EP 1 777 853 A1**

(12) **EUROPEAN PATENT APPLICATION**
published in accordance with Art. 158(3) EPC

(43) Date of publication:
**25.04.2007 Bulletin 2007/17**

(51) Int Cl.:
*H04J 15/00* (2006.01)      *H04B 7/04* (2006.01)
*H04J 11/00* (2006.01)

(21) Application number: **05775928.4**

(22) Date of filing: **05.09.2005**

(86) International application number:
**PCT/JP2005/016265**

(87) International publication number:
**WO 2006/028061 (16.03.2006 Gazette 2006/11)**

(84) Designated Contracting States:
**DE FR GB**

(30) Priority: **09.09.2004 JP 2004263006**

(71) Applicant: **MATSUSHITA ELECTRIC INDUSTRIAL CO., LTD.**
**Osaka 571-8501 (JP)**

(72) Inventors:
• **HOSHINO, Masayuki.,**
**Matsushita El.Ind.Co.Ltd**
**Osaka-shi, Osaka 540-6319 (JP)**

• **HAGA, Hiroki.,**
**Matsushita El.Ind.Co.Ltd**
**Osaka-shi, Osaka 540-6319 (JP)**

(74) Representative: **Grünecker, Kinkeldey,**
**Stockmair & Schwanhäusser**
**Anwaltssozietät**
**Maximilianstraße 58**
**D-80538 München (DE)**

(54) **MIMO TRANSMITTING APPARATUS, MIMO RECEIVING APPARATUS, AND PILOT SYMBOL TRANSMISSION METHOD**

(57) A MIMO transmitting apparatus for improving the frame timing detection performance in a cell search. In the MIMO transmitting apparatus, a pilot pattern designating part (108) designates a pilot pattern corresponding to a scrambling code and sends the designation to pilot inserting parts (110-1 to 110-4). The pilot inserting parts (110-1 to 110-4) each insert pilot symbols in accordance with the designation of the pilot pattern designating part (108) into predetermined positions of a respective stream. A scrambling pattern designating part (112) designates a scrambling pattern, i.e., a pattern of reversing the signs of the subcarriers of the pilot symbols in each stream and sends the designation to scrambling parts (114-1 to 114-4). The scrambling parts (114-1 to 114-4) reverse the signs of a half number of subcarriers corresponding to the end or front symbols of the streams in accordance with the designation of the scrambling pattern designating part (112).

EP 1 777 853 A1

**Description**

Technical Field

The present invention relates to a MIMO (Multi Input Multi Output) transmitting apparatus, MIMO receiving apparatus and pilot symbol transmission method, and more particularly, to a MIMO transmitting apparatus, MIMO receiving apparatus and pilot symbol transmission method in a multi-carrier CDMA scheme that transmits signals using a plurality of carriers (hereinafter "sub-carriers") of different frequencies.

Background Art

In recent years, MIMO communication that transmits space multiplexed data from a plurality of transmission antennas and receives at a plurality of reception antennas has been actively studied. In MIMO communication, the transmission side transmits different data (hereinafter "streams") from a plurality of transmission antennas, and the reception side separates each of the streams and performs demodulation, so that it is possible to substantially improve the transmission efficiency.

In order to differentiate streams for each transmission antenna in this MIMO communication, it has been studied to make the patterns of pilot symbols within a single frame orthogonal between transmission antennas (for example, Non-patent Document 1).

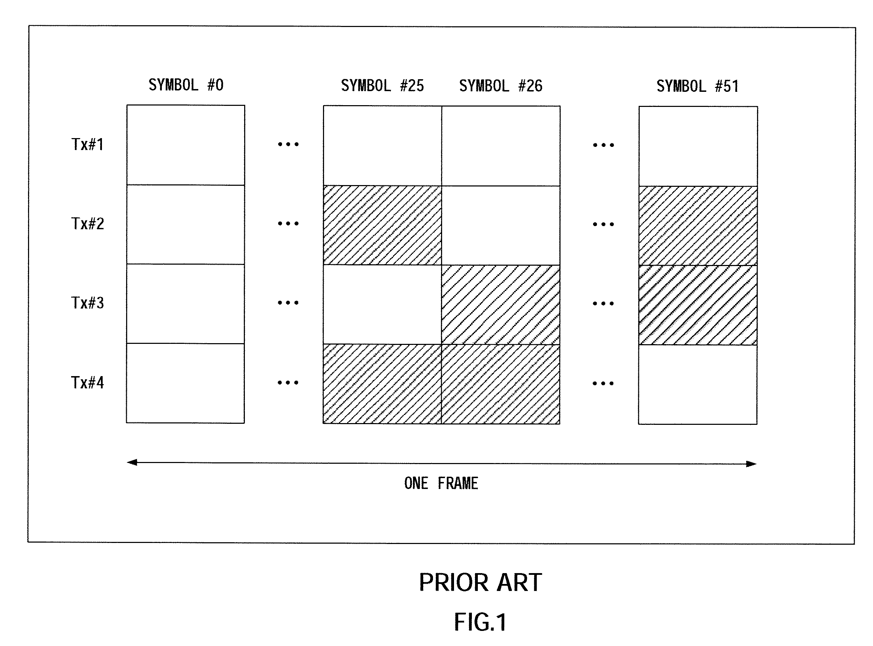

FIG.1 shows an example of patterns of pilot symbols in MIMO communication. In this figure, the white symbols indicate "+1", and the shaded symbols indicate "-1". As shown in FIG. 1, in this MIMO communication, streams are transmitted from four transmission antennas (Tx #1 to #4), and one frame of each stream is formed with 52 symbols (symbols #0 to #51).

The frame start symbol (symbol #0) and end symbol (symbol #51) are pilot symbols for detecting a frame timing, and the two symbols at the center of the frame (symbols #25 and #26) are pilot symbols for differentiating the four transmission antennas. Between these pilot symbols, data symbols are inserted.

Here, the pattern of the pilot symbols of transmission antenna Tx #1 is (+1, +1, +1, +1), the pattern of the pilot symbols of transmission antenna Tx #2 is (+1, -1, +1, -1), the pattern of the pilot symbols of transmission antenna Tx #3 is (+1, +1, -1, -1), and the pattern of the pilot symbols of transmission antenna Tx #4 is (+1, -1, -1 +1), and the patterns are orthogonal to each other.

The scrambling code used in cell search is determined for each transmitting apparatus, so that, for example, a mobile station apparatus which receives a signal from the transmitting apparatus can distinguish the cell to which the mobile station apparatus belongs by identifying the scrambling code which assumes the pattern of the pilot symbols of transmission antenna Tx #1 within the received signal.

By the way, regarding the above-mentioned cell search using the scrambling code, 3GPP-based standardization is being promoted, and regarding W-CDMA (Wideband-Code Division Multiple Access) and multi-carrier CDMA, cell search which has three-step operation is being studied. For the three-step cell search relating to multi-carrier CDMA, three-step operation such as the following is proposed (refer to, for example, Non-patent Document 2).

That is, in the first step, a symbol timing is detected using a guard interval. Next, in the second step, a frame timing and scrambling code group are detected using consecutive two symbols (for example, the above-mentioned symbol #51 and next frame symbol #0). Then, in the third step, the scrambling code is detected within the detected code group.

Non-patent Document 1: "Complexity-reduced Maximum Likelihood Detection Based on Replica Candidate Selection with QR Decomposition Using Pilot-Assisted Channel Estimation and Ranking for MIMO Multiplexing Using OFCDM", March 2004, NTT DoCoMo, Inc., RCS2003-312
Non-patent Document 2: "Cell Search Time Performance of Three-Step Fast Cell Search Algorithm Employing Common Pilot Channel for Forward Link Broadband OFCDM Wireless Access", July 2002, NTT DoCoMo, Inc., RCS2002-135

Disclosure of the Invention

Problems to be Solved by the Invention

However, in the second step of the above-mentioned 3-step cell search, the problem arises that, in order to detect the frame timing using two consecutive symbols, when the pilot symbol pattern is as shown in FIG. 1, the frame timing must be detected in a state where the signals from a plurality of transmission antennas are mixed.

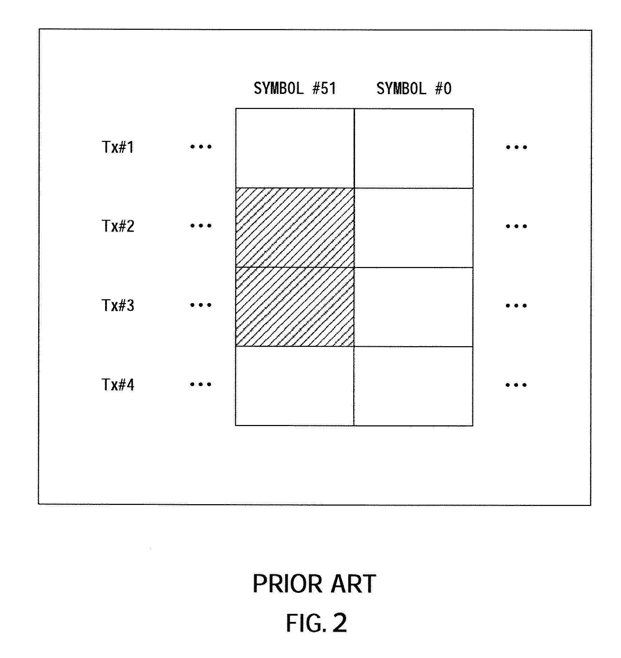

That is, in the second step of the 3-step cell search, symbol #51 and next frame symbol #0 shown in FIG. 1 need to be detected, but, as shown in FIG.2, symbol #51 and symbol #0 of transmission antenna Tx #1 and transmission antenna Tx #4 are both aligned with (+1, +1), and symbol #51 and symbol #0 of transmission antenna Tx #2 and transmission antenna Tx #3 are both aligned with (-1, +1). Therefore, in the second step of the cell search at the reception side, the streams cannot be completely separated for each transmission antenna, and the streams from the different transmission antennas that are subjected to fading fluctuation may cancel out each other.

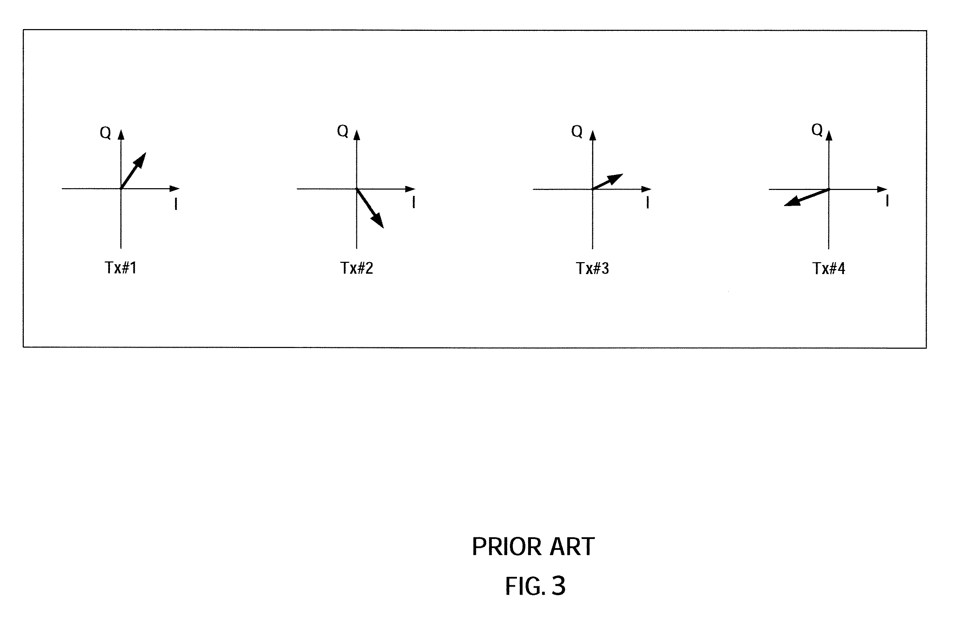

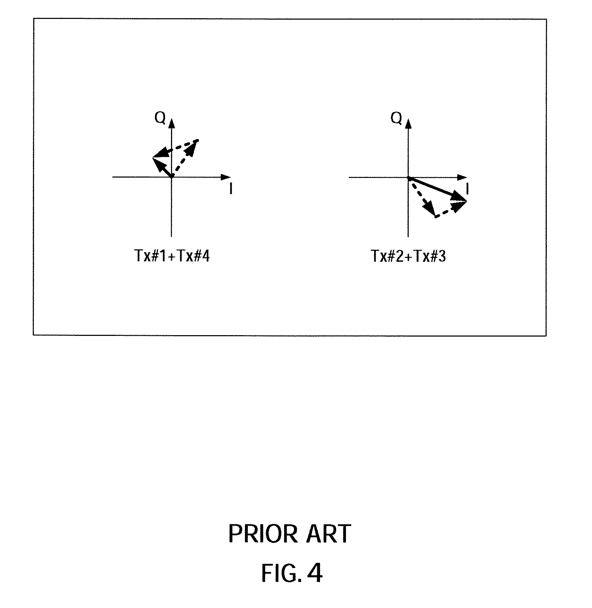

Specifically, when the fading fluctuation with respect to the streams of transmission antennas Tx #1 to #4 is as shown in FIG.3, as described above, the streams of transmission antenna Tx #1 and transmission antenna Tx #4 cannot be separated at the reception side, and, as a result of the fading fluctuation with respect to these two streams, the power of the streams are weakened each other as shown in the left diagram of FIG.4. As a result, the frame timing must be detected based on a faint reception signal, and detection accuracy may deteriorate.

It is therefore an object of the present invention to provide a MIMO transmitting apparatus, MIMO receiving apparatus and pilot symbol transmission method capable of improving the frame timing detection accuracy in cell search.

Means for Solving the Problem

The MIMO transmitting apparatus according to the present invention transmits a plurality of streams formed with a plurality of subcarriers, and employs a configuration having: an insertion section that inserts pilot symbols at starts and ends of frames included in the plurality of streams; and a processing section that inverts the signs of half of subcarriers of the start pilot symbols or end pilot symbols for streams other than one stream in a stream group having the same pair of the inserted start pilot symbol and end pilot symbol.

The MIMO receiving apparatus according to the present invention employs a configuration having: an inverse processing section that inverts, for each of all scrambling codes which may correspond to a communicating party, the signs of subcarriers where all two consecutive symbols included in one frame length of a received signal are inverted by the communicating party; a calculation section that calculates correlation values for each stream at the communicating party using the two consecutive symbols after inverse processing; a correction section that corrects the phases of the correlation values corresponding to the same two consecutive symbols out of the calculated correlation values for each stream to the same phase; and a synthesizing section that synthesizes the correlation values after correction.

The pilot symbol transmission method according to the present invention transmits pilot symbols included in a plurality of streams formed with a plurality of subcarriers, and has the steps of: inserting pilot symbols at starts and ends of frames included in the plurality of streams; inverting the signs of half of subcarriers of the start pilot symbols or end pilot symbols for streams other than one stream in a stream group having the same pair of the inserted start pilot symbol and end pilot symbol; and transmitting the plurality of streams that include the pilot symbols after inverse processing.

Advantageous Effect of the Invention

According to the present invention, it is possible to improve the frame timing detection accuracy in cell search.

Brief Description of Drawings

FIG.1 shows an example of the patterns of pilot symbols in a frame;
FIG.2 shows an example of the frame end symbol and the next frame start symbol;
FIG.3 shows an example of fading fluctuation for each transmission antenna;
FIG.4 shows an example of the synthesized fading fluctuation;
FIG.5 is a block diagram showing the main configuration of a MIMO transmitting apparatus according to Embodiment 1 of the present invention;
FIG.6 is a block diagram showing the main configuration of a MIMO receiving apparatus according to Embodiment 1 of the present invention;
FIG.7 shows an example of inverting the signs of subcarriers according to Embodiment 1;
FIG.8 shows an example of power synthesis according to Embodiment 1 of the present invention;
FIG.9 is a block diagram showing the main configuration of a MIMO transmitting apparatus according to Embodiment 2 of the present invention; and
FIG.10 is a block diagram showing the main configuration of a MIMO receiving apparatus according to Embodiment 2 of the present invention.

Best Mode for Carrying Out the Invention<sub><0></sub>

Embodiments of the present invention will be described in detail with reference to the accompanying drawings.

(Embodiment 1)

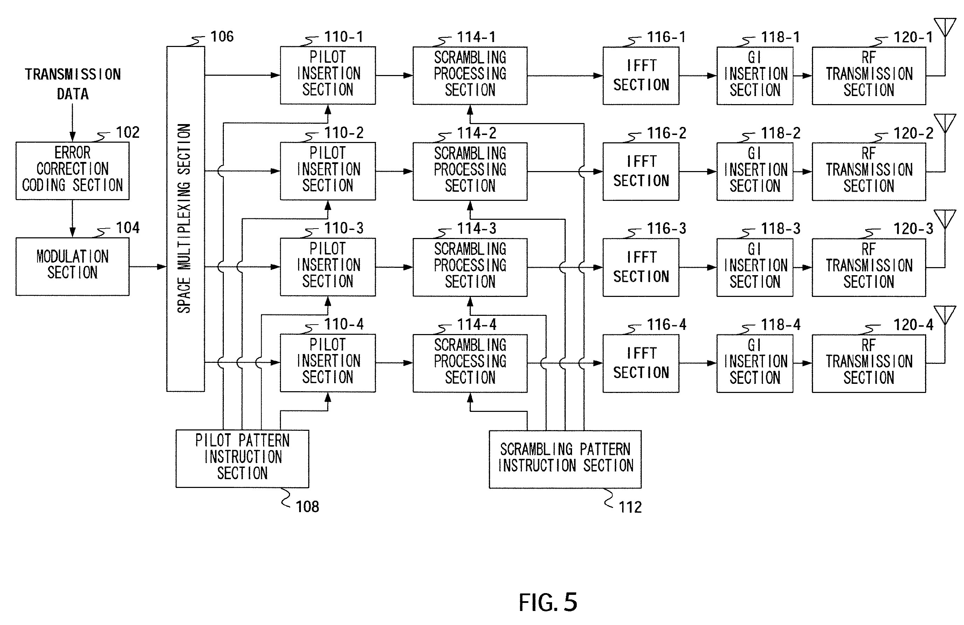

FIG.5 is a block diagram showing the main configuration of the MIMO transmitting apparatus according to Embodiment 1 of the present invention. The MIMO transmitting apparatus shown in FIG.5 has error correction coding section 102, modulation section 104, space multiplexing section 106, pilot pattern instruction section 108, pilot insertion sections 110-1 to 110-4, scrambling pattern instruction section 112, scrambling processing sections 114-1 to 114-4, IFFT (Inverse Fast Fourier Transform) sections 116-1 to 116-4, GI (Guard Interval) insertion sections 118-1 to 118-4, and RF (Radio Frequency) transmission sections 120-1 to 120-4. Although the MIMO transmitting apparatus shown in FIG.5 has four transmission antennas and four processing sections from pilot insertion sections 110-1 to 110-4 to RF transmission sections 120-1 to 120-4 corresponding to the transmission antennas, the present invention is not limited to this, and the number of transmission antennasmay bearbitrary. In the following description, the transmission antenna connected to RF transmission section 120-1, the transmission antenna connected to RF transmission section 120-2, the transmission antenna connected to RF transmission section 120-3, and the transmission antenna connected to RF transmission section 120-4 will be referred to as transmission antenna Tx #1, transmission antenna Tx #2, transmission antenna Tx #3, and transmission antenna Tx #4, respectively.

Error correction coding section 102 performs error correction coding on the transmission data and outputs the result to modulation section 104.

Modulation section 104 demodulates the transmission data and outputs the result to space multiplexing section 106.

Space multiplexing section 106 space multiplexes the transmission data and generates four streams corresponding to the number of transmission antennas.

Pilot pattern instruction section 108 instructs pilot insertion sections 110-1 to 110-4 of the pattern (pilot pattern) of the pilot symbols corresponding to the scrambling code for specifying the MIMO transmitting apparatus. That is, in this embodiment, in order to specify the transmission source of the signal at the reception side, different pilot symbols are inserted in the frame for each transmission antenna, and pilot pattern instruction section 108 instructs pilot insertion sections 110-1 to 110-4 of arrangement of pilot symbols for each transmission antenna.

Pilot insertion sections 110-1 to 110-4 each insert pilot symbols in accordance with the instruction of pilot pattern instruction section 108 at a predetermined position that includes the frame start and end of each stream. Specifically, when one frame of each stream is formed with 52 symbols (symbols #0 to #51), for example, pilot insertion sections 110-1 to 110-4 each insert "+1" or "-1" in start symbol #0, end symbol #51 and center symbols #25 and #26 according to the transmission antennas.

Scrambling pattern instruction section 112 instructs scrambling processing sections 114-1 to 114-4 of the inverse pattern of the signs of the subcarriers of the pilot symbols in each stream (scrambling pattern) . That is, in order to separate the streams based on the pilot symbols which are continued between the end of the frame and start of the next frame at the reception side, scrambling pattern instruction section 112 instructs scrambling processing sections 114-1 to 114-4 to invert the signs of half of the subcarriers of either the end symbol or start symbol for streams other than one stream in a stream group having the same pair of two consecutive symbols (hereinafter "end symbol" and "start symbol," respectively). The scrambling pattern will be described in detail later using specific examples.

Scrambling processing sections 114-1 to 114-4 invert the signs of half of the subcarriers of either the end symbol or start symbol of each stream according to the instruction of scrambling pattern instruction section 112. Specifically, when the pair of the frame end symbol and next frame start symbol is the same between the streams processed at scrambling processing section 114-1 and scrambling processing section 114-4, for example, scrambling processing section 114-1 does not perform any processing. On the other hand, scrambling processing section 114-4 inverts the signs of the odd number (or even number) subcarriers of the end symbol (or start symbol).

IFFT sections 116-1 to 116-4 perform inverse fast Fourier transform on the streams to convert a frequency domain signal to a time domain signal.

GI insertion sections 118-1 to 118-4 insert a guard interval between two symbols by copying the end portion of the subsequent symbol and inserting the copy.

RF transmission sections 120-1 to 120-4 perform predetermined radio transmission processing (such as D/A conversion and up conversion) on the streams after guard interval insertion and transmit the streams via transmission antennas.

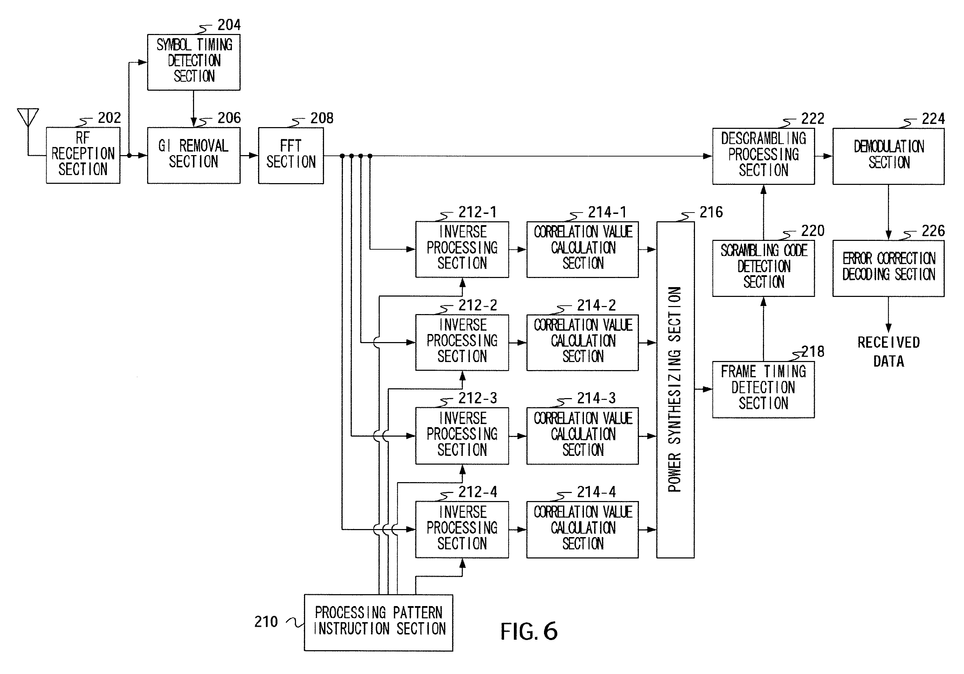

FIG.6 is a block diagram showing the main configuration of the MIMO receiving apparatus according to Embodiment 1. The MIMO receiving apparatus shown in FIG.6 has RF reception section 202, symbol timing detection section 204, GI removal section 206, FFT (Fast Fourier Transform) section 208, processing pattern instruction section 210, inverse processing sections 212-1 to 212-4, correlation value calculation sections 214-1 to 214-4, power synthesizing section 216, frame timing detection section 218, scrambling code detection section 220, descrambling processing section 222, demodulation section 244 and error correction decoding section 226.

RF reception section 202 receives a signal via a reception antenna and performs predetermined radio reception processing (such as down conversion and A/D conversion) on the received signal.

Symbol timing detection section 204 detects the symbol timing of the received signal by detecting the guard interval inserted between symbols.

GI removal section 206 removes the guard interval from the received signal using the symbol timing detection result.

FFT section 208 performs fast Fourier transform on the received signal after guard interval removal to convert the time domain signal to a frequency domain signal.

Processing pattern instruction section 210 instructs inverse processing sections 212-1 to 212-4 of the subcarriers whose signs to be inverted, for all scrambling patterns and pilot patterns . That is, in this embodiment, the arrangement of pilot symbols is determined according to the scrambling code, and, for streams having the same pair of the end symbol and start symbol, the signs of half of subcarriers of the end symbol or start symbol are inverted at the transmission side. Here, processing pattern instruction section 210 assumes pilot patterns corresponding to all scrambling codes for all two consecutive symbols included in one frame length of the received signal, and instructs inverse processing sections 212-1 to 212-4 to sequentially restore the inverted subcarriers at the transmission side to the original states in each of the pilot patterns.

Inverse processing sections 212-1 to 212-4 sequentially perform inverse processing on the two consecutive symbols of the received signal according to the instruction of processing pattern instruction section 210. Specifically, in the above-mentioned example of the scrambling patterns of scrambling processing sections 114-1 to 114-4 of the MIMO transmitting apparatus, inverse processing sections 212-1 to 212-4 sequentially output the two consecutive symbols to correlation value calculation section 214-1 without performing any processing at inverse processing section 212-1 which corresponds to scrambling processing section 114-1. On the other hand, inverse processing section 212-4 which corresponds to scrambling processing section 114-4, inverts the signs of the odd number (or even number) subcarriers of the first (or second) symbol out of the two consecutive symbols, and sequentially outputs these two consecutive symbols to correlation value calculation section 214-4.

Correlation value calculation sections 214-1 to 214-4 calculate the correlation value from the two consecutive symbols outputted from inverse processing sections 212-1 to 212-4. Here, the correlation value is the value that expresses these two symbols with power under the premise that the two consecutive symbols are the end symbol and the start symbol. Thus, when the correlation value of two consecutive symbols is a maximum, the premise that the two consecutive symbols are the end symbol and start symbol is appropriate, and the two symbols can be determined to be the end symbol and start symbol.

Power synthesizing section 216 corrects the phases of the correlation values which correspond to each other and are outputted from correlation value calculation section 214-1 to 214-4 to the same phase, synthesizes the correlation values and calculates the power value related to the two consecutive symbols. Correlation value calculation sections 214-1 to 214-4 sequentially output over a single frame the correlation values of the two consecutive symbols corresponding to each of all scrambling codes, and power synthesizing section 216 corrects the phases of the correlation values corresponding to the pairs of the same two consecutive symbols to the same phase and synthesizes the correlation values.

Frame timing detection section 218 refers to the power values outputted from power synthesizing section 216, detects the pair of the two consecutive symbols whose power value is a maximum, and detects the frame timing based on the fact that this pair of two symbols is the frame end symbol and next frame start symbol. In addition, frame timing detection section 218 specifies the scrambling code group from the arrangement of the end symbol and start symbol.

Scrambling code detection section 220 specifies one scrambling code included in the scrambling code group from the arrangement of the end symbol, start symbol and pilot symbols located at the center of the frame.

Descrambling processing section 222 performs descrambling processing on the received signal using the scrambling code specified by scrambling code detection section 220, and outputs the received signal after processing to demodulation section 224.

Demodulation section 224 demodulates the received signal and outputs the result to error correction decoding section 226.

Error correction decoding section 226 performs error correction decoding on the received signal, and outputs the received data.

Next, the operation of the MIMO transmitting apparatus and MIMO receiving apparatus configured as described above will be described using specific

examples.

First, the transmission operation of the MIMO transmitting apparatus will be described.

Transmission data is subjected to error correction coding by error correction coding section 102, and demodulated by modulation section 104. The demodulated transmission data is space multiplexed by space multiplexing section 106 so that the signals can be separated for each propagation path at the reception side, and four streams corresponding to the number of transmission antennas are generated. The generated four streams are outputted to pilot insertion sections 110-1 to 110-4.

Then, pilot symbols in accordance with the pilot pattern are inserted to the streams by pilot insertion sections 110-1 to 110-4 . Here, pilot symbols are inserted at the frame start and end for detecting a frame timing, and also at the two center symbols for differentiating streams for each transmission antenna. In this embodiment, since there are four transmission antennas, four pilot symbols are inserted to the frame of each stream, but the number of pilot symbols may increase when there are five or more transmission antennas.

The pilot pattern as described above corresponds to the scrambling code, and, in the description hereinafter, it is assumed that the pilot symbols are inserted based on the pattern shown in FIG.1. That is, the pattern of the pilot symbols of transmission antenna Tx #1 is (+1, +1, +1, +1), the pattern of the pilot symbols of transmission antenna Tx #2 is (+1, -1, +1, -1), the pattern of the pilot symbols of transmission antenna Tx #3 is (+1, +1, -1, -1), and the pattern of the pilot symbols of transmission antenna Tx #4 is (+1, -1, -1, +1) . These patterns are orthogonal to each other, and the pilot pattern formed with these patterns corresponds to transmission antennas Tx #1 to #4. This pilot pattern is instructed by pilot pattern instruction section 108 to pilot insertion sections 110-1 to 110-4.

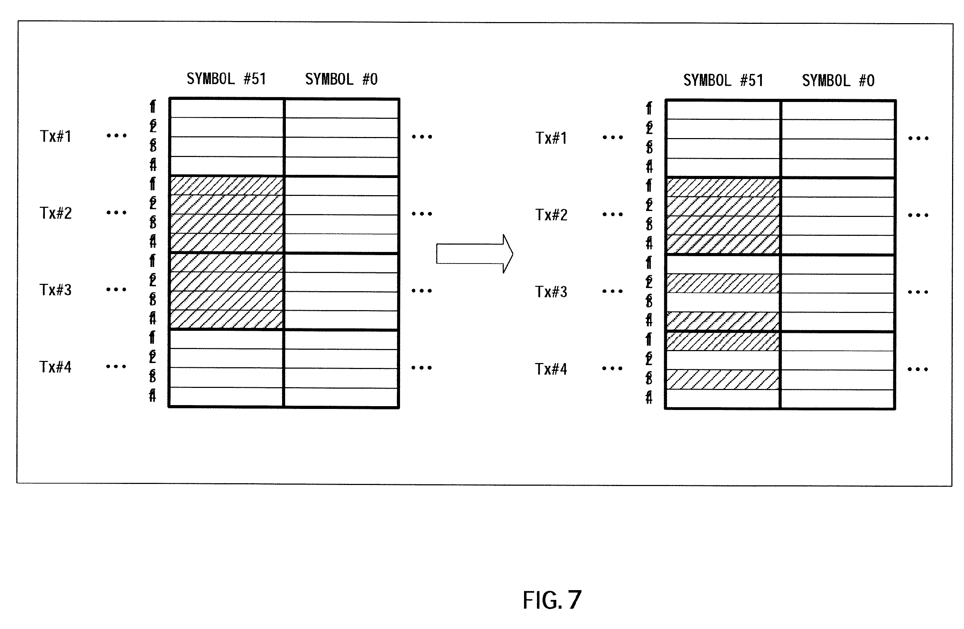

Then, the streams in which the pilot symbols are inserted are outputted to scrambling processing sections 114-1 to 114-4. Scrambling processing sections 114-1 to 114-4 invert the signs of half of subcarriers that transmit the end symbol (or start symbol) of the streams other than one stream in the stream group having the same pair of the end symbol and start symbol in accordance with the pilot pattern. That is, when the pilot symbols in accordance with the above-mentioned pilot pattern are inserted, the pairs of the end symbol and start symbol of transmission antenna Tx #1 and transmission antenna Tx #4 are both (+1, +1), and the pairs of the end symbol and start symbol of transmission antenna Tx #2 and transmission antenna Tx #3 are both (-1, +1), as shown in FIG.7.

Here, according to the instruction of scrambling pattern instruction section 112, scrambling processing sections 114-1 to 114-4 invert the signs of the odd number subcarriers of the end symbols for the streams of transmission antenna Tx #3 and transmission antenna Tx #4 without performing any processing on the streams of transmission antenna Tx #1 and transmission antenna Tx #2. That is, as shown in FIG.7, for the streams of transmission antenna Tx #3 and transmission antenna Tx #4, the signs of subcarriers f1 and f3 are inverted out of subcarriers f1 to f4 of the end symbols. Thus, the end symbol "-1" transmitted from transmission antenna Tx #3 becomes "+1" by the signs of subcarriers f1 and f3 being inverted, and the end symbol "+1" transmitted from transmission antenna Tx #4 becomes "-1" by the signs of subcarriers f1 and f3 being inverted.

At this time, scrambling processing sections 114-1 to 114-4 receive from scrambling pattern instruction section 112 a scrambling pattern instruction that indicates which signs of which streams are to be inverted. For example, when there are eight transmission antennas, it is considered that two stream groups including four streams having the same pair of the end symbol and start symbol are formed, but scrambling pattern instruction section 112 outputs the instruction to invert the signs of half of the subcarriers of the end symbols (or start symbols) of three streams of one stream group. In this scrambling pattern, the signs of half of the subcarriers are inverted for three streams per stream group, and the positions of the subcarriers whose signs are to be inverted are orthogonal to each other in each stream of the same stream group, so that it is possible to differentiate the streams. That is, for example, the signs of the odd number subcarriers are inverted in one stream. The signs of the first two subcarriers are inverted, and the signs of subsequent two subcarriers are inverted every two subcarriers in another stream. The sign of the first subcarrier is inverted, and the signs of subsequent two subcarriers are inverted every two subcarriers in the other stream.

In this way, each stream is made possible to separate based on only the pair of the end symbol and start symbol, and outputted to IFFT sections 116-1 to 116-4. Then, IFFT sections 116-1 to 116-4 perform inverse fast Fourier transform on each stream to obtain a time domain signal, GI insertion sections 118-1 to 118-4 insert a guard interval between symbols, and RF transmission sections 120-1 to 120-4 transmit the result via the transmission antennas.

The above-described transmission operation can be expressed by the following equations.

First, when the phase of the nth subcarrier out of all $N_c$ subcarriers of the start symbol in the mth frame of a transmission signal is assumed to be $x_n(m, 0)$, the equation is as follows:

$$x_n(m, 0) = x_n \ (\text{where}, \ |x_n| = 1, \ n = 0 \ \text{to} \ N_c - 1) \qquad \text{equation (1)}$$

The pattern of the start symbol and end symbol corresponds to the scrambling code group, and therefore, when the relationship between the start symbol and end symbol corresponding to the jth scrambling code group out of $N_{grp}$ scrambling code groups is expressed by $C_j$, the following equation can be obtained:

$$C_j = \{c_{j,n}\} \quad (where, \quad |c_{j,n}| = 1, \quad j = 0 \text{ to } N_{grp} - 1)$$

$$\text{equation (2)}$$

From equations (1) and (2), phase $y_{j,n}(m, N_s-1)$ of the nth subcarrier of the end symbol in the mth frame can be expressed as follows:

$$y_{j,n}(m, \quad N_s - 1) = c_{j,n} \times x_n \qquad \text{equation (3)}$$

In equation (3), $N_s$ indicates the number of symbols in one frame. The start symbol is (the 0th) start symbol in the frame, and therefore expressed as $x_n(m, 0)$, and the end symbol is (the $(N_s-1)$) end symbol in the frame, and therefore is expressed as $y_{j,n}(m, N_s-1)$.

In this embodiment, pilot symbols are transmitted from four transmission antennas, and the end symbols transmitted from transmission antenna Tx #2 and transmission antenna Tx #3 are "-1", and therefore, when transmission antenna Tx #1 (end symbol is "+1") is used as a reference, the phases of the subcarriers of the end symbols of transmission antenna Tx #2 and transmission antenna Tx #3 of pilot insertion sections 110-2 and 110-3 can be expressed as follows:

$$y_{j,n}(m, \quad N_s - 1) = (-1) \times c_{j,n} \times x_n \qquad \text{equation (4)}$$

Start symbol $X_n(m, 0)$ shown in equation (1) and end symbol $y_{j,n}(m, N_s-1)$ shown in equation (3) and equation (4) are respectively outputted from pilot insertion sections 110-1 to 110-4.

Then, for the streams corresponding to transmission antenna Tx #3 and transmission antenna Tx #4, the signs of half of the subcarriers of the end symbols are inverted by scrambling processing sections 114-3 and 114-4. When the signs of the odd number subcarriers of the end symbols of these streams are inverted, the phases of the end symbols of transmission antenna Tx #3 and transmission antenna Tx #4 are obtained by multiplying equation (4) and equation (3) by $(-1)^n$, respectively, as follows : <sub>o}</sub>

$$y_{j,n}(m, \quad N_s - 1) = (-1)^{n+1} \times c_{j,n} \times x_n \qquad \text{equation (5)}$$

$$y_{j,n}(m, \quad N_s - 1) = (-1)^n \times c_{j,n} \times x_n \qquad \text{equation (6)}$$

In this way, the streams that include start symbol $x_n(m, 0)$ shown in equation (1) and end symbol $y_{j,n}(m, N_s-1)$ shown in equations (3) to (6) are respectively outputted from transmission antennas Tx #1 to #4. Furthermore, equation (5) and equation (6) are the equations at the time the signs of the odd number subcarriers are inverted, but, when the signs of the even number subcarriers are inverted, the end symbol of equation (6) corresponds to transmission antenna Tx #3, and the end symbol of equation (5) corresponds to transmission antenna Tx #4.

Next, the reception operation of the MIMO receiving apparatus will be described.

A received signal received via a reception antenna is subjected to predetermined radio reception processing by RF reception section 202, and the symbol timing is detected by the guard interval being detected by symbol timing detection section 204. Furthermore, GI removal section 206 removes the guard interval between symbols using the symbol timing. The reception signals after the guard interval is removed are subjected to fast Fourier transform by FFT section 208, and outputted to descrambling processing section 222 and inverse processing sections 212-1 to 212-4.

Then two consecutive symbols corresponding to the four streams of the transmission side are extracted by inverse processing sections 212-1 to 212-4. That is, processing pattern instruction section 210 instructs inverse processing sections 212-1 to 212-4 of pilot patterns and scrambling patterns corresponding to all scrambling codes, and inverse processing sections 212-1 to 212-4 invert the signs of the subcarriers corresponding to all pairs of two consecutive symbols included in one frame length according to all pilot patterns and scrambling patterns.

Specifically, as described above, at the transmission side, the end symbol of transmission antenna #1 is "+1", the end symbol of transmission antenna Tx #2 is "-1", the end symbol of transmission antenna Tx #3 is "-1", and the end symbol of transmission antenna Tx #4 is "+1", and the signs of the odd number subcarriers of the end symbols of transmission antenna Tx #3 and transmission antenna Tx #4 are inverted. When processing pattern instruction section 210 instructs inverse processing sections 212-1 to 212-4 of the pilot patterns and scrambling patterns in this way, inverse processing section 212-1 outputs the pair of two consecutive symbols to correlation value calculation section 214-1 without performing any processing. Inverse processing section 212-2 regards the first symbol out of the two consecutive symbols as the end symbol and inverts the sign of the overall symbol. This is because, in the pilot pattern instructed by processing pattern instruction section 210, the sign of the overall symbol of the end symbol of transmission antenna Tx #2 is inverted using the end symbol of transmission antenna Tx #1 as a reference.

Furthermore, inverse processing section 212-3 regards the first symbol out of the two consecutive symbols as the end symbol, and, after inverting the sign of the overall symbol, inverts the signs of odd number subcarriers. This is because, in the pilot patterns and scrambling patterns instructed by processing pattern instruction section 210, the sign of the overall symbol of the end symbol of transmission antenna Tx #3 is inverted using the end symbol of transmission antenna Tx #1 as a reference, and further the signs of odd number subcarriers are inverted. Similarly, inverse processing section 212-4 regards the first symbol out of the two consecutive symbols as the end symbol and inverts the signs of even number subcarriers.

Such processing is performed for all pairs of two consecutive symbols included in one frame length of the received signal. Here, if the pilot patterns and scrambling patterns instructed by processing pattern instruction section 210 are used at the transmission side, and the pair of two consecutive symbols which is a target of processing of inverse processing sections 212-1 to 212-4 is the end symbol and start symbol, the processing results of inverse processing sections 212-1 to 212-4 indicate that interference components caused by streams other than the corresponding streams at the transmission side are removed, and the end symbols and start symbols of four streams are extracted. That is, in the above-mentioned example, inverse processing section 212-4 inverts, for example, the signs of the odd number subcarriers of the first symbol out of the two consecutive symbols, thereby removing the interference components caused by streams other than the stream of transmission antenna Tx #4, if this pair of two consecutive symbols is the end symbol and start symbol.

In this way, the pair of two consecutive symbols subjected to inverse processing according to all pilot patterns and scrambling patterns is outputted to correlation value calculation sections 214-1 to 214-4. Then, correlation value calculation sections 214-1 to 214-4 calculate the correlation values related to all pairs of two consecutive symbols.

The calculated correlation values are synthesized by power synthesizing section 216 after the phases are corrected to the same phase for each group corresponding to the same pair of two consecutive symbols, and the power values related to all pairs of two consecutive symbols are outputted to frame timing detection section 218. Here, the number of outputted power values corresponds to all pilot patterns and scrambling patterns, and further corresponds to all pairs of two consecutive symbols included in one frame length.

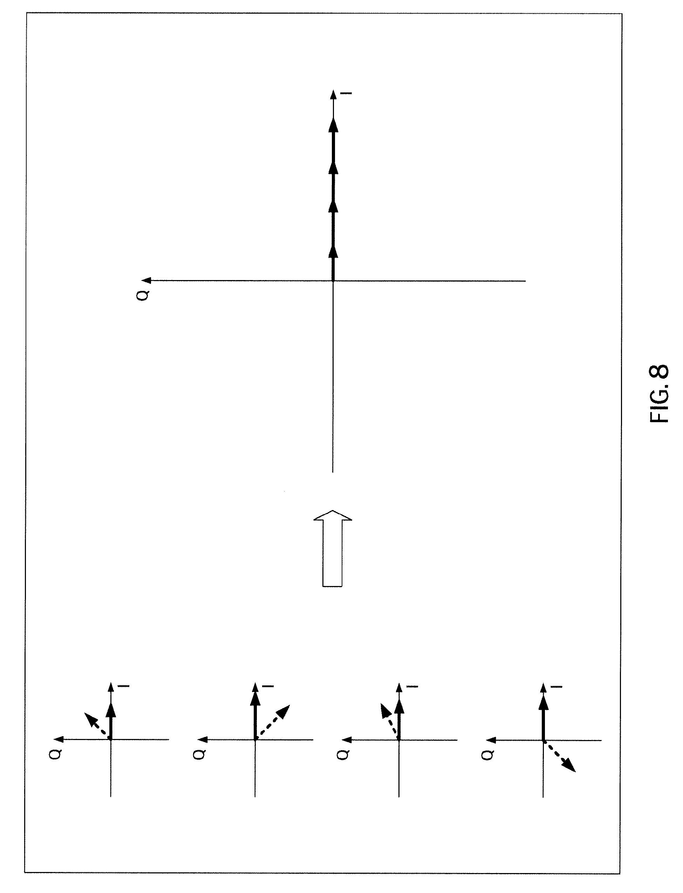

Here, power synthesizing section 216, as shown in FIG.8, corrects the phases of the correlation values of the streams shown by the dashed line vectors to the same phase and adds the obtained solid line vectors to accurately calculate the power values corresponding to the pairs of two consecutive symbols.

Then, frame timing detection section 218 selects the maximum power value from the power values outputted frompower synthesizing section 216. When the power value outputted frompower synthesizing section 216 is a maximum, it means that the pair of two consecutive symbols corresponding to the maximum power value is the end symbol and start symbol, and, further, processing pattern instruction section 210 assumes the appropriate pilot pattern and scrambling pattern. Therefore, frame timing detection section 218 detects the frame timing from the reception timing of the symbols which are identified as the end symbol and start symbol, and determines that the scrambling code group corresponding to the pilot patterns and scrambling patterns assumed for these symbols is the scrambling code group of the transmission source of the signal (MIMO transmitting apparatus).

When the frame timing and scrambling code group are detected in this way, scrambling code detection section 220 refers to all pilot symbols including the start symbol and end symbol in the frame and specifies the scrambling code based on the pilot pattern of the pilot symbols. Then, descrambling processing section 222 performs descrambling processing on the received signal using the scrambling code, demodulation section 224 demodulates the received signal, and error correction decoding section 226 performs error correction decoding to obtain the received data.

The above-described reception operation can be expressed by the following equations.

First, the phase of the nth subcarrier of the kth symbol in the mth frame of the received signal is expressed as $r_n(m, k)$. Inverse processing sections 212-1 to 212-4 perform inverse processing on the pair of two consecutive symbols, and therefore the processing targets of inverse processing sections 212-1 to 212-4 are symbol $r_n(m, k-1)$, symbol $r_n(m,$

k), and all pairs of two consecutive symbols included in one frame length which are obtained by sequentially increasing k from 1 to $N_s$.

At this time, inverse processing sections 212-1 to 212-4 receive the instruction of pilot patterns and scrambling patterns from processing pattern instruction section 210, and invert the signs of the overall symbol or the signs of half of the subcarriers of the symbols according to this instruction. Specifically, when, for example, inverse processing section 212-1 to 212-4 receive the instruction of the pilot patterns and scrambling patterns of the above-mentioned MIMO transmitting apparatus from processing pattern instruction section 210, inverse processing section 212-1 sequentially outputs the symbol $r_n$(m, k-1) and symbol $r_n$(m, k) to correlation value calculation section 214-1 without performing any processing on the pair of two consecutive symbols. Then, inverse processing section 212-2 inverts the sign of the overall symbol $r_n$(m, k-1) which is assumed as the end symbol, and sequentially outputs symbol $(-1) \times r_n$(m, k-1) and symbol $r_n$(m, k) to correlation value calculation section 214-2. Then, inverse processing section 212-3 inverts the sign of the overall symbol $r_n$(m, k-1) which is assumed as the end symbol, further inverts the signs of the odd number subcarriers, and then sequentially outputs symbol $(-1)^{n+1} \times r_n$(m, k-1) and symbol $r_n$(m, k) to correlation value calculation section 214-3. Then, inverse processing section 212-4 inverts the signs of the odd number subcarriers of symbol $r_n$(m, k-1) which is assumed as the end symbol, and sequentially outputs symbol $(-1)^n \times r_n$(m, k-1) and symbol $r_n$(m, k) to correlation value calculation section 214-4.

Then, correlation value calculation sections 214-1 to 214-4 calculate the correlation values using the pairs of two consecutive symbols outputted from the corresponding inverse processing section 212-1 to 212-4. Correlation value $S_i$(m, k) corresponding to the ith scrambling code group is defined by the following equation with the complex conjugate expressed as "*":

$$S_i(m,k) = \sum_{n=0}^{N_c-1} c_{i,n}^* \cdot r_n(m,k-1) \cdot r_n^*(m,k) \cdots \text{equation } (7)$$

Where, equation (7) equals the correlation value when no processing is performed on the two consecutive symbols $r_n$(m, k-1) and $r_n$(m, k). In this embodiment, inverse processing sections 212-1 to 212-4 perform inverse processing on the pairs of two consecutive symbols, and therefore the two symbols outputted from inverse processing sections 212-1 to 212-4 4 may be substituted in the above equation (7).

That is, correlation value calculation sections 214-1 to 214-4 calculate the correlation values through the following equations (8) to (11).

$$S_i(m,k) = \sum_{n=0}^{N_c-1} c_{i,n}^* \cdot r_n(m,k-1) \cdot r_n^*(m,k) \cdots \text{equation } (8)$$

$$S_i(m,k) = \sum_{n=0}^{N_c-1} c_{i,n}^* \cdot (-1) \cdot r_n(m,k-1) \cdot r_n^*(m,k) \cdots \text{equation } (9)$$

$$S_i(m,k) = \sum_{n=0}^{N_c-1} c_{i,n}^* \cdot (-1)^{n+1} \cdot r_n(m,k-1) \cdot r_n^*(m,k) \cdots \text{equation } (10)$$

$$S_i(m,k) = \sum_{n=0}^{N_c-1} c_{i,n}^* \cdot (-1)^n \cdot r_n(m,k-1) \cdot r_n^*(m,k) \cdots \text{equation } (11)$$

These correlation values correspond to the streams at the transmission side, and, for example, the correlation value calculated by equation (8) is the correlation value related to the stream of transmission antenna Tx #1, with the interference components caused by the streams of other transmission antennas Tx #2 to #4 removed. That is, the correlation values corresponding to the individual streams can be separately calculated. The correlation value is calculated for all pilot patterns and scrambling patterns, and further for all pairs of two consecutive symbols included in one frame length. In other words, in the above-mentioned equations (8) to (11), (ixk) types of correlation values related to all i and k are calculated.

The calculated correlation values are synthesized by power synthesizing section 216 after the phases of a group corresponding to the same pair of two consecutive symbols are corrected to the same phase, and the power values are calculated. Thus, the power values corresponding to all pairs of two consecutive symbols included in one frame length are calculated, and the pair of two consecutive symbols that corresponds to the maximum power value is selected by frame timing detection section 218. Frame timing detection section 218 then detects the frame timing corresponding to the selected pair of two consecutive symbols, and further specifies the scrambling code group based on the pilot pattern and scrambling pattern corresponding to this pair of two consecutive symbols. In other words, the above-mentioned equations (8) to (11) specify i and k which make the power value a maximum.

Subsequently, scrambling code detection section 220 refers to all pilot symbols up to the pilot symbols positioned at the center of the frame to specify the scrambling code in the scrambling code group.

As described above, according to this embodiment, out of four streams corresponding to four transmission antennas, for the two streams having the same pair of the end symbol and start symbol, the transmission side inverts the signs of the odd number (or even number) subcarriers of the end symbol (or start symbol) of a stream and transmits the streams in a separable state. The reception side performs inverse processing corresponding to the streams at the transmission side on the two consecutive symbols of the received signal and calculates the correlation values. As a result, the correlation values calculated at the reception side can be obtained with the streams transmitted from the transmission antennas being separated, and can be synthesized after the phases of correlation values corresponding to the streams are corrected to the same phase. As a result, it is possible to accurately select the pair of two consecutive symbols that gives the maximum correlation value and improve the frame timing detection accuracy in cell search. In addition, at the reception side, when, for example, the detection operation corresponding to only transmission antenna Tx #1 is performed, it is possible to suppress the influence of the mixture of signals transmitted from other transmission antennas Tx #2 to #4 to a minimum and improve the frame timing detection accuracy with a simple configuration.

(Embodiment 2)

It is a feature of Embodiment 2 of the present invention to, in a stream group having the same pair of the end symbol and start symbol out of a plurality of streams, transmit at least one stream at a normal power, while transmitting the other streams after reducing the pilot symbol power.

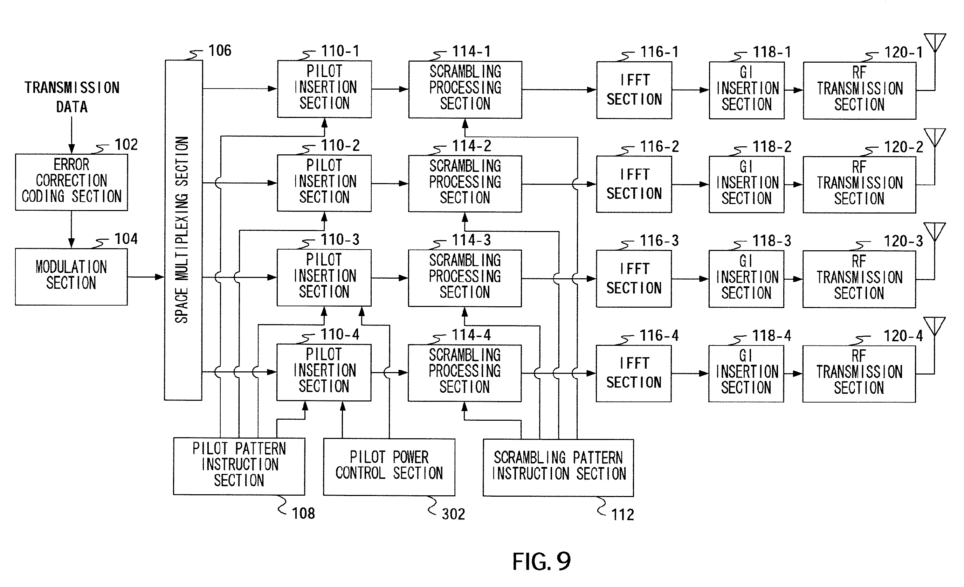

FIG.9 is a block diagram showing the main configuration of the MIMO transmitting apparatus according to this embodiment. In this figure, the parts that are the same as those of FIG.5 will be assigned the same reference numerals without further explanation. The MIMO transmitting apparatus shown in FIG.9 employs a configuration adding pilot power control section 302 to the MIMO transmitting apparatus shown in FIG.5.

Pilot power control section 302 multiplies the power of the pilot symbols to be inserted at pilot insertion section 110-3 out of pilot insertion sections 110-2 and 110-3 having the same pairs of the end symbol and start symbol to be inserted to the frame, by constant $\alpha$ ($\alpha$ < 1). Similarly, pilot power control section 302 multiplies the power of the pilot symbols to be inserted at pilot insertion section 110-4 out of pilot insertion sections 110-1 and 110-4 having the same pairs of the end symbol and start symbol, by constant $\alpha$.

The MIMO transmitting apparatus according to this embodiment reduces the power of the pilot symbols in a part of streams in this way, and therefore it is difficult to receive the pilot symbols of these streams at the remotely located MIMO receiving apparatus. In other words, the interference against the pilot symbols of normally transmitted streams becomes small.

That is, in this embodiment, for the streams having the same pair of the end symbol and start symbol, in addition to inverting the signs of half of odd number (or even number) subcarriers of the end symbols (or start symbols) of streams, the transmission power of the pilot symbols of the streams is reduced. As a result, at the reception side, since the signs of half of subcarriers are inverted, it is possible to differentiate the streams, decrease the interference caused by the other stream, and further accurately calculate the correlation values for each stream.

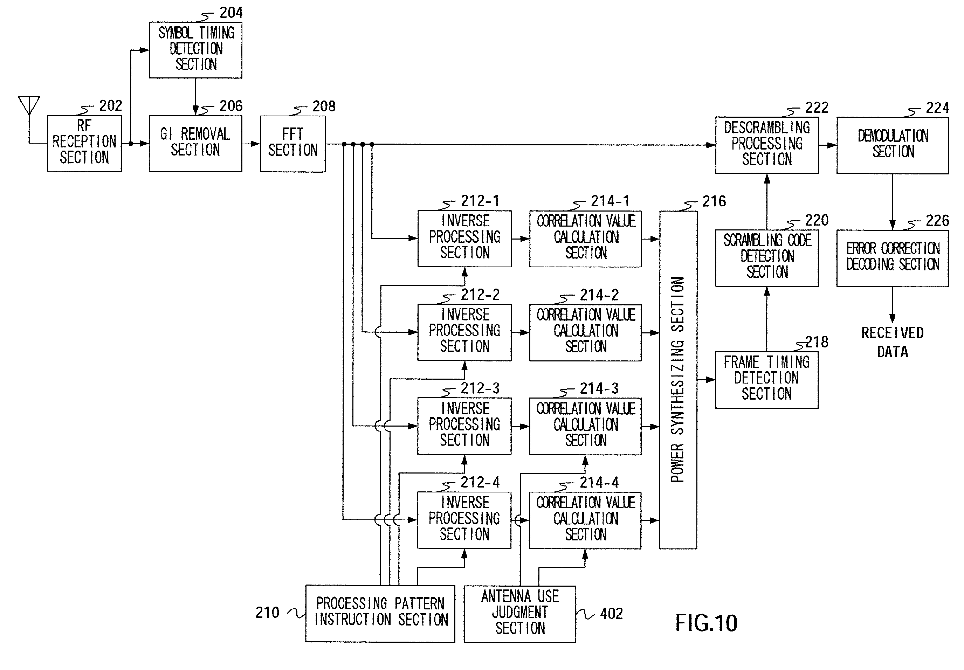

FIG.10 is a block diagram showing the main configuration of the MIMO receiving apparatus according to this embodiment. In this figure, the parts that are the same as those of FIG.6 will be assigned the same reference numerals without further explanation. The MIMO receiving apparatus shown in FIG.10 employs a configuration adding antenna use judgment section 402 to the MIMO receiving apparatus shown in FIG.6.

Antenna use judgment section 402 judges whether or not to calculate the correlation values corresponding to all transmission antennas Tx #1 to #4 based on, for example, power consumption and location condition upon the previous power activation, and instructs correlation value calculation sections 214-3 and 214-4 corresponding to the streams where the power of the pilot symbols is reduced at the transmission side of whether or not to stop operation. Specifically, for example, when it is judged that the MIMO receiving apparatus is remotely located from the MIMO transmitting apparatus upon the previous power activation, and that the power consumption required for cell search should be suppressed, antenna use judgment section 402 does not calculate the correlation values related to the streams of transmission antennas Tx #3 and #4 where the power of the pilot symbols is reduced to constant $\alpha$ times. Conversely, when it is judged that the MIMO receiving apparatus is under preferred conditions such as being located directly under the MIMO transmitting apparatus, and that time required for cell search should be reduced even if only slightly, antenna use judgment section 402 calculates the correlation values related to the streams of transmission antennas Tx #3 and #4 and detects the frame timing using these correlation values.

As described above, according to this embodiment, the transmission side transmits a stream out of the streams having the same pair of the end symbol and start symbol at the normal power and the other stream after reducing the power of the pilot symbols, and the reception side calculates or does not calculate the correlation values related to the stream where the power of the pilot symbols is reduced based on power consumption and location conditions. As a result, it is possible to flexibly switch the frame timing detection operation according to the location conditions of the MIMO receiving apparatus and the requirement for the power consumption.

A first aspect of the present invention is the MIMO transmitting apparatus that transmits a plurality of streams formed with a plurality of subcarriers, and employs a configuration having: an insertion section that inserts pilot symbols at starts and ends of frames included in the plurality of streams; and a processing section that inverts the signs of half of subcarriers of the start pilot symbols or end pilot symbols of streams other than one stream in a stream group having the same pair of the inserted start pilot symbol and end pilot symbol.

According to this configuration, pilot symbols are inserted at the starts and ends of the frames, and the signs of half of the subcarriers of the start or end pilot symbols are inverted for the streams other than one stream in a stream group having the same pair of the pilot symbols, so that it is possible for the reception side to separate the streams upon detecting the start and end pilot symbols, detect the frame timing after the phases of the correlation values for each stream is corrected to the same phase, and improve the frame timing detection accuracy in cell search.

A second aspect of the present invention is the MIMO transmitting apparatus that employs a configuration in the above-described first aspect, wherein the insertion section inserts the pilot symbols at the starts and ends of the frames in a pattern corresponding to the scrambling code of the MIMO transmitting apparatus.

According to this configuration, the pilot symbols are inserted at the starts and ends of the frames in a pattern corresponding to the scrambling code, so that it is possible for the reception side to specify the scrambling code upon detecting the start and end pilot symbols.

A third aspect of the present invention is the MIMO transmitting apparatus that employs a configuration in the above-described first aspect, wherein the processing section inverts, for the streams other than one stream, the signs of the subcarriers which are orthogonal to the signs of the subcarriers of the one stream and whose positions are orthogonal to each other.

According to this configuration, the positions of subcarriers whose signs of the start or endpilot symbols are inverted are orthogonal in all streams, so that it is possible to reliably separate all streams at the reception side.

A fourth aspect of the present invention is the MIMO transmitting apparatus that employs a configuration in the above-described first aspect, wherein the insertion section further has a control section that reduces the transmission power of the pilot symbols to be inserted to the streams other than one stream.

According to this configuration, the transmission power of the pilot symbols of the streams where the signs of half of subcarriers are inverted is low, so that it is possible for the reception side to remove the interference caused by the streams where the signs of the subcarriers are inverted when extracting the symbols corresponding to the streams where the signs of the subcarriers are not inverted.

A fifth aspect of the present invention is the MIMO receiving apparatus that employs a configuration having: an inverse processing section that inverts, for each of all scrambling codes which may correspond to a communicating party, the signs of subcarriers where all two consecutive symbols included in one frame length of a received signal are inverted by the communicating party; a calculation section that calculates correlation values for each stream at the communicating party using the two consecutive symbols after inverse processing; and a correction section that corrects the phases of the correlation values corresponding to the same two consecutive symbols out of the calculated correlation values for each stream to the same phase; and a synthesizing section that synthesizes the correlation values after correction.

According to this configuration, for allpatterns that may be inverted at the transmission side, the signs of the subcarriers of the two consecutive symbols are inverted, and the correlation values for each stream corresponding to all these patterns are calculated, corrected and synthesized, so that it is possible to detect the frame timing in a state where the symbols for each stream are reinforced each other and improve the frame timing detection accuracy in cell search.

A sixth aspect of the present invention is the MIMO receiving apparatus that employs a configuration in the above-described fifth aspect, wherein the calculation section stops the calculation of the correlation values of streams where the power of the pilot symbols is reduced out of the streams of the communicating party.

According to this configuration, the calculation of the correlation values of streams where the power of the pilot symbols is low is stopped, so that it is possible to flexibly switch the frame timing detection operation according to the location conditions of the MIMO receiving apparatus and the requirement for the power consumption.

A seventh aspect of the present invention is the pilot symbol transmission method that transmits pilot symbols included in a plurality of streams formed with a plurality of subcarriers, and has the steps of : inserting pilot symbols at starts and ends of frames included in the plurality of streams; inverting the signs of half of subcarriers of the start pilot symbols or end pilot symbols of streams other than one stream in a stream group having the same pair of the inserted start pilot symbol and end pilot symbol; and transmitting the plurality of streams that include the pilot symbols after inverse processing.

According to this configuration, pilot symbols are inserted at the starts and ends of the frames, and the signs of half of the subcarriers of the start or end pilot symbols are inverted for the streams other than one stream in the stream group having the same pair of pilot symbols, so that it is possible for the reception side to separate the streams upon detecting the start and end pilot symbols, detect the frame timing after the phases of the correlation values for each stream are corrected to the same phase, and improve the frame timing detection accuracy in cell search.

The present application is based on Japanese Patent Application No.2004-263006, filed on September 9, 2004, the entire content of which is expressly incorporated by reference herein.

Industrial Applicability

The MIMO transmitting apparatus, MIMO receiving apparatus and pilot symbol transmission method of the present invention are capable of improving frame timing detection accuracy in cell search, and suitable for use as the MIMO transmitting apparatus, MIMO receiving apparatus and pilot symbol transmission method in, for example, a multi-carrier CDMA scheme that transmits signals using a plurality of subcarriers of different frequencies.

**Claims**

1. A MIMO transmitting apparatus that transmits a plurality of streams formed with a plurality of subcarriers, comprising:

   an insertion section that inserts pilot symbols at starts and ends of frames included in the plurality of streams; and
   a processing section that inverts the signs of half of subcarriers of the start pilot symbols or end pilot symbols of streams other than one stream in a stream group having the same pair of the inserted start pilot symbol and end pilot symbol.

2. The MIMO transmitting apparatus according to claim 1, wherein the insertion section inserts the pilot symbols at the starts and ends of the frames in a pattern corresponding to the scrambling code of the MIMO transmitting apparatus.

3. The MIMO transmitting apparatus according to claim 1, wherein the processing section inverts, for the streams other than one stream, the signs of the subcarriers which are orthogonal to the signs of the subcarriers of the one stream and whose positions are orthogonal to each other.

4. The MIMO transmitting apparatus according to claim 1, wherein the insertion section further comprises a control section that reduces the transmission power of the pilot symbols to be inserted to the streams other than one stream.

5. A MIMO receiving apparatus comprising:

   an inverse processing section that inverts, for each of all scrambling codes which may correspond to a communicating party, the signs of subcarriers where all two consecutive symbols included in one frame length of a received signal are inverted by the communicating party;
   a calculation section that calculates correlation values for each stream at the communicating party using the two consecutive symbols after inverse processing;
   a correction section that corrects the phases of the correlation values corresponding to the same two consecutive symbols out of the calculated correlation values for each stream to the same phase; and

a synthesizing section that synthesizes the correction values after correction.

6. The MIMO receiving apparatus according to claim 5, wherein the calculation section stops the calculation of the correlation values of streams where the power of the pilot symbols is reduced out of the streams of the communicating party.

7. A pilot symbol transmission method for transmitting pilot symbols included in a plurality of streams formed with a plurality of subcarriers, the pilot symbol transmission method comprising the steps of:

inserting pilot symbols at starts and ends of frames included in the plurality of streams;
inverting the signs of half of subcarriers of the start pilot symbols or end pilot symbols of streams other than one stream in a stream group having the same pair of the inserted start pilot symbol and end pilot symbol; and
transmitting the plurality of streams that include the pilot symbols after inverse processing.

SYMBOL #0   SYMBOL #25   SYMBOL #26   SYMBOL #51

Tx#1

Tx#2

Tx#3

Tx#4

ONE FRAME

PRIOR ART

FIG.1

PRIOR ART
FIG. 2

PRIOR ART

FIG. 3

Tx#1+Tx#4

Tx#2+Tx#3

PRIOR ART

FIG. 4

FIG. 5

EP 1 777 853 A1

204 SYMBOL TIMING DETECTION SECTION

202 RF RECEPTION SECTION

206 GI REMOVAL SECTION

208 FFT SECTION

222 DESCRAMBLING PROCESSING SECTION

224 DEMODULATION SECTION

212-1 INVERSE PROCESSING SECTION

214-1 CORRELATION VALUE CALCULATION SECTION

216 POWER SYNTHESIZING SECTION

220 SCRAMBLING CODE DETECTION SECTION

226 ERROR CORRECTION DECODING SECTION

212-2 INVERSE PROCESSING SECTION

214-2 CORRELATION VALUE CALCULATION SECTION

212-3 INVERSE PROCESSING SECTION

214-3 CORRELATION VALUE CALCULATION SECTION

218 FRAME TIMING DETECTION SECTION

RECEIVED DATA

212-4 INVERSE PROCESSING SECTION

214-4 CORRELATION VALUE CALCULATION SECTION

210 PROCESSING PATTERN INSTRUCTION SECTION

FIG. 6

FIG. 7

FIG.8

FIG. 9

FIG.10

## INTERNATIONAL SEARCH REPORT

| | International application No. |
|---|---|
| | PCT/JP2005/016265 |

**A. CLASSIFICATION OF SUBJECT MATTER**
*H04J15/00*(2006.01), *H04B7/04*(2006.01), *H04J11/00*(2006.01)

According to International Patent Classification (IPC) or to both national classification and IPC

**B. FIELDS SEARCHED**

Minimum documentation searched (classification system followed by classification symbols)
*H04J15/00*(2006.01), *H04B7/04*(2006.01), *H04J11/00*(2006.01)

Documentation searched other than minimum documentation to the extent that such documents are included in the fields searched
Jitsuyo Shinan Koho       1922-1996   Jitsuyo Shinan Toroku Koho    1996-2005
Kokai Jitsuyo Shinan Koho   1971-2005   Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Yoshihisa KISHIYAMA, Noriyuki MAEDA, Hiroyuki ATARASHI, Mamoru SAWAHASHI, Investigation of optimum pilot channel structure for VSF-OFCDM broadband wireless access in forward link", In: Vehicular Technology Conference 2003, 25 April, 2003 (25.04.03), Vol. 1, pages 139 to 144 | 1-7 |
| A | Hirohisa KISHIYAMA, Noriyuki MAEDA, Hiroyuki ATARASHI, Mamoru SAWAHASHI, "VSF-OFDM ni okeru Pilot Channel Kosei no Kento", The Institute of Electronics, Information and Communication Engineers Gijutsu Kenkyu Hokoku, 17 October, 2002 (17.10.02), Vol.102, No.373, pages 19 to 24 | 1-7 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 November, 2005 (24.11.05) | 06 December, 2005 (06.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004263006 A

**Non-patent literature cited in the description**

- Complexity-reduced Maximum Likelihood Detection Based on Replica Candidate Selection with QR Decomposition Using Pilot-Assisted Channel Estimation and Ranking for MIMO Multiplexing Using OFCDM. NTT DoCoMo, Inc, March 2004

- Cell Search Time Performance of Three-Step Fast Cell Search Algorithm Employing Common Pilot Channel for Forward Link Broadband OFCDM Wireless Access. NTT DoCoMo, Inc, July 2002